# EUROPÄISCHE PATENTANMELDUNG

(11) **EP 2 241 974 A2**
(43) Veröffentlichungstag der Anmeldung: **20.10.2010**
(21) Anmeldenummer: 10002932.1
(22) Anmeldetag: 19.03.2010
(51) Int. Cl.: G06F 9/46

(54) **Sicherer Speicherzugriff auf einem portablen Datenträger**

(30) Priorität: 26.03.2009 DE 102009014995
(71) Anmelder: Giesecke & Devrient GmbH, 81677 München (DE)
(72) Erfinder: Baldischweiler, Michael, 81825 München (DE); Stocker, Thomas, 81739 München (DE)

(57) **Zusammenfassung**

Auf einem portablen Datenträger (1) mit einem nichtflüchtigen Speicher (5) und einer Prozesssteuerung (9) zur nebenläufigen Prozessausführung prüft eine Zugriffssteuerung (8) in dem Fall, dass ein Ausführen eines zweiten Prozesses (11) während eines auszuführenden, schreibend auf den nichtflüchtigen Speicher (5) zugreifenden ersten Prozesses (10) vorgesehen ist, ob der zweite Prozess (11) bei einem nebenläufigen Ausführen zu dem ersten Prozess (10) derart auf den nichtflüchtigen Speicher (5) zugreift, dass ein Zugriffskonflikt auftreten kann. Sofern die Prüfung ergibt, dass ein derartiger Zugriffskonflikt auftreten kann, greift die Zugriffssteuerung (8) derart in die Prozesssteuerung (9) ein, dass der zweite Prozess (11) ohne Zugriffskonflikt ausgeführt wird.

## Beschreibung

Die vorliegende Erfindung betrifft ein Verfahren auf einem multitaskingfähigen portablen Datenträger, gemäß dem ein zweiter Prozesses während eines schreibend auf einen nichtflüchtigen Speicher des Datenträgers zugreifenden ersten Prozesses auszuführen ist, sowie einen derartigen multitaskingfähigen portablen Datenträger.

Wie bei allen Systemen, deren Betriebssystem eine nebenläufige Prozessausführung unterstützt, besteht auch bei multitaskingfähigen portablen Datenträgern das Problem, dass ein Zugriff eines zweiten Prozesses auf einen nichtflüchtigen Speicher des Datenträgers, während bereits ein erster Prozess schreibend auf den nichtflüchtigen Speicher zugreift, zu Zugriffskonflikten bzw. zu Dateninkonsistenzen führen kann. Deshalb wird ein zweiter Prozess, der während eines andauernden Schreibzugriffs eines ersten Prozesses auf den nichtflüchtigen Speicher zugreifen muss, üblicherweise von einer Prozesssteuerung (engl. "Scheduler") des Datenträgers im Rahmen der regulären nebenläufigen Prozessausführung (engl. "Scheduling") suspendiert, d.h. temporär nicht weiter ausgeführt, und erst nach Beendigung des ersten Prozesses fortgesetzt. Abhängig von der Funktion und der Ausführungspriorität des zweiten Prozesses kann dies allerdings zu einer zumindest für multitaskingfähige Systeme inakzeptabel langen Suspendierung des zweiten Prozesses führen.

Generell besteht bei einem multitaskingfähigen System während der gesamten (möglicherweise im Rahmen der nebenläufigen Prozessumschaltung häufiger suspendierten) Ausführung eines schreibend auf den nichtflüchtigen Speicher zugreifenden ersten Prozesses das Problem, dass die Prozesssteuerung im Rahmen der regelmäßigen Prozessumschaltung einen zweiten Prozess aktiviert, dessen ausführbarer Programmcode und/ oder dessen benötigte Daten im nichtflüchtigen Speicher liegen. Dieses Problem wird bei herkömmlichen Plattformen bzw. Computerarchitekturen, bei denen keine besonderen Anforderungen an eine Ressourceneffizienz bestehen, üblicherweise durch Synchronisation aller Zugriffe auf den nichtflüchtigen Speicher bzw. durch Aufteilen des ausführbaren Programmcodes und der benötigten Daten von Prozessen auf unterschiedliche Speicherbänke oder durch Kopieren des ausführbaren Programmcodes und der benötigten Daten in einen flüchtigen Speicher umgangen. Allerdings sind derartige Lösungen für speicherrestriktive Plattformen portabler Datenträger, wie z.B. Smart Cards, Chipkarten, (U)SIM-Mobilfunkkarten, sichere Multimediakarten, Geldkarten oder dergleichen, entweder aufgrund des erhöhten Verwaltungsaufwands ungeeignet oder aufgrund der eingeschränkten Speicherressourcen gar nicht umsetzbar.

In diesem Zusammenhang offenbart die US 2003/0089786 A1 ein Verfahren, bei dem während eines Schreibzugriffs in einen nichtflüchtigen Speicher in diesem Speicher liegender Programmcode ausgeführt werden kann, wobei jedoch weitere Schreibzugriffe in den nichtflüchtigen Speicher unterbunden werden. Demgegenüber schlägt die EP 1818 817 A2 vor, einen ausführbaren Programmcode von dem nichtflüchtigen in den flüchtigen Speicher zu kopieren, um ihn auch während eines Schreibzugriffs auf den nichtflüchtigen Speicher ausführen zu können.

Abgesehen von der oben geschilderten Problematik können auch bei multitaskingfähigen Datenträgern Ereignisse eintreten, die von der Prozesssteuerung nicht kontrollierbar sind und auf die unmittelbar mit einer veränderten Prozessausführung reagiert werden muss. Beispielsweise werden unmittelbar zu bearbeitende Ereignisse, z.B. Pufferspeicherüberläufe, Datenkommunikationsanfragen, kritische Zustände einzelner Komponenten oder dergleichen, von einer Unterbrechungseinrichtung des Datenträgers registriert, die daraufhin ein Unterbrechungssignal ( engl. "Interrupt") auslöst, aufgrund dessen der momentan ausgeführte Prozess von der Prozesssteuerung suspendiert wird, um das registrierte Ereignis durch eine entsprechende Unterbrechungsroutine (engl. "Interrupt Service Routine"; ISR) bevorzugt zu behandeln. Die Ausführung solcher Unterbrechungsroutinen, die auch während eines schreibend auf den nichtflüchtigen Speicher zugreifenden (ersten) Prozesses auf den nichtflüchtigen Speicher zugreifen können müssen, unterliegt jedoch weder der Prozesssteuerung noch können Unterbrechungsroutinen suspendiert werden. Etwaige daraus resultierende Zugriffskonflikte bzw. Dateninkonsistenzen können von einer herkömmlichen Prozesssteuerung eines multitaskingfähigen Datenträgers nur mit hohem Aufwand erkannt und vermieden werden, was durch die eingeschränkten Ressourcen eines portablen Datenträgers noch erschwert wird.

Es ist demzufolge die Aufgabe der vorliegenden Erfindung, Zugriffskonflikte auf den nichtflüchtigen Speicher eines portablen Datenträgers abzufangen und eine ausgewogene und effiziente Prozessausführung zu ermöglichen.

Diese Aufgabe wird durch ein Verfahren sowie einen Datenträger mit den Merkmalen der unabhängigen Ansprüche gelöst. In den davon abhängigen Ansprüchen sind vorteilhafte Ausgestaltungen und Weiterbildungen der Erfindung angegeben.

Erfindungsgemäß prüft auf einem portablen Datenträger mit einem nichtflüchtigen Speicher und einer Prozesssteuerung zur nebenläufigen Prozessausführung eine von der Prozesssteuerung unabhängige Zugriffssteuerung, ob ein zweiter Prozess, dessen Ausführung während eines auszuführenden, auf den nichtflüchtigen Speicher zugreifenden ersten Prozesses vorgesehen ist, beim nebenläufigen Ausführen zu dem ersten Prozess derart auf den nichtflüchtigen Speicher zugreift, dass ein Zugriffskonflikt auftreten kann. Sofern die Zugriffssteuerung einen solchen Zugriffskonflikt erkennt, greift sie derart in die Prozesssteuerung ein, dass der zweite Prozess ohne Zugriffskonflikte ausgeführt werden kann.

Die erfindungsgemäße Zugriffssteuerung ist in der Lage, einen potentiellen Zugriffskonflikt, der durch ein nebenläufiges Ausführen des ersten und des zweiten Prozesses im Rahmen der regulären nebenläufigen Prozessausführung entstehen könnte, vorherzusehen bzw. vorauszuberechnen und die Prozesssteuerung zur Vermeidung des vorhergesehenen Zugriffskonflikts entsprechend zu beeinflussen. Die Zugriffssteuerung repräsentiert also eine der Prozesssteuerung übergeordnete und in diese eingreifende Instanz, die eine zugriffskonfliktfreie nebenläufige Prozessausführung sicherstellt. Dabei kann die Zugriffssteuerung gerade aufgrund ihrer Unabhängigkeit von der Prozesssteuerung auch potentielle Zugriffskonflikte und Dateninkonsistenzen im nichtflüchtigen Speicher berücksichtigen, die für die nebenläufige Prozesssteuerung, die lediglich auszuführenden Prozessen gemäß vorgegebenen Kriterien Ausführungszeit zuteilt, nicht zu erkennen sind, da sie außerhalb ihres Aufgabengebiets liegen. Die erfindungsgemäße Zugriffssteuerung verhindert also Zugriffskonflikte durch Lesezugriffe auf den nichtflüchtigen Speicher bei laufenden Schreibzugriffen in sinnvoller und ausgewogener Weise. Insbesondere ermöglicht die erfindungsgemäße Zugriffssteuerung eine speicher- und performanceoptimierte nebenläufige Ausführung von (zweiten) Prozessen während der Ausführung eines schreibend auf den nichtflüchtigen Speicher zugreifenden (ersten) Prozesses.

Als Teil des multitaskingfähigen Betriebssystems des Datenträgers gewährleistet die Prozesssteuerung die scheinbar gleichzeitige Ausführung mehrere Prozesse (engl. "tasks"; Aufgaben). Dabei wird den verschiedenen Prozessen abhängig von ihren jeweiligen Ausführungsprioritäten und abhängig von vorgegebenen Ausführungsregeln in so kurzen Abständen alternierend Ausführungszeit zugewiesen, dass der Eindruck der Gleichzeitigkeit/Parallelität bzw. der Nebenläufigkeit entsteht. In diesem Zusammenhang ist im Rahmen der vorliegenden Erfindung unter einer nebenläufigen Prozessausführung nicht nur ein "Multitasking" sondern auch ein "Multithreading" zu verstehen, also die Fähigkeit des Betriebssystem und der Prozesssteuerung, einen Prozess in mehrere Bearbeitungsstränge (engl. "threads"; Unterprozesse) aufzuteilen und auch diese nebenläufig abzuarbeiten. Vor diesem Hintergrund greift die erfindungsgemäße unabhängige Zugriffssteuerung - sofern notwendig - in die nebenläufige Prozessausführung der Prozesssteuerung in einer Weise ein, dass die für die Prozesssteuerung normalerweise verbindlichen vorgegebenen Ausführungsregeln zugunsten der Vermeidung von Zugriffskonflikten temporär außer Kraft gesetzt werden.

Ein erfindungsgemäßer portabler Datenträger, vorzugsweise eine Smart Card, eine sichere Multimediakarte, eine Mobilfunkkarte, eine Chipkarte mit Geldbörsenfunktion oder dergleichen, umfasst neben einem nichtflüchtigen Speicher und einem Prozessor ein multitaskingfähiges Betriebssystem mit einer Prozesssteuerung, die eingerichtet ist, auf dem Prozessor Prozesse gemäß den jeweiligen Ausführungsprioritäten und vorgegebenen Ausführungsregeln nebenläufig auszuführen. Ferner umfasst der Datenträger die oben genannte, der Prozesssteuerung übergeordnete und von dieser unabhängige Zugriffssteuerung, die einerseits eingerichtet ist, zu prüfen, ob bei einer nebenläufigen Ausführung eines zweiten Prozesses zu einem schreibend auf den nichtflüchtigen Speicher zugreifenden ersten Prozess, der zweite Prozess derart auf den nichtflüchtigen Speicher zugreift, dass ein Zugriffskonflikt auftreten kann, und andererseits eingerichtet ist, derart in die Prozesssteuerung einzugreifen, dass der zweite Prozess ohne Zugriffskonflikt ausgeführt werden kann, sofern die Prüfung ergeben hat, dass ein Zugriffskonflikt potentiell auftreten kann.

Die Zugriffssteuerung, die sowohl als Teil des Betriebssystems des Datenträgers als auch separat von diesem ausgestaltet sein kann, ist eingerichtet, eine Vielzahl von potentiellen Zugriffskonflikten im Zusammenhang mit einem schreibend auf den nichtflüchtigen Speicher zugreifenden ersten Prozess zu erkennen, die außerhalb des üblichen Aufgabengebiets der Prozesssteuerung liegen und insofern von dieser nicht erfasst werden können.

So kann die Zugriffssteuerung gemäß einer ersten bevorzugten Ausführungsform einen bevorstehenden Zugriff eines von der Prozesssteuerung nebenläufig zu einem schreibend auf den nichtflüchtigen Speicher zugreifenden ersten Prozess ausgeführten zweiten Prozesses auf den nichtflüchtigen Speicher erkennen. Die Zugriffssteuerung ist demzufolge derart ausgestaltet, dass sie einen potentiell zu einem Zugriffskonflikt führenden Zugriff des zweiten Prozesses bereits in einem Stadium erkennt, in dem der Zugriff von dem zweiten Prozess noch nicht tatsächlich begonnen wurde, sondern lediglich beabsichtigt ist bzw. vorbereitet wird. Insofern kann die Zugriffssteuerung eine Unterbrechungseinrichtung umfassen, die ein Unterbrechungssignal (Interrupt) erzeugt, sobald ein Speicherzugriff des zweiten Prozesses erkannt wird. Eine diesem Speicherzugriffs-Unterbrechungssignal zugeordnete Unterbrechungsroutine (ISR) setzt dann eine Suspendierungsanweisung an die Prozesssteuerung ab, die die Prozesssteuerung von außen veranlasst, den zweiten Prozess zu suspendieren.

Vorzugsweise erkennt die Zugriffssteuerung einen bevorstehenden Zugriff des zweiten Prozesses bereits auf Hardware-Ebene und insofern frühzeitig genug, um in die Prozesssteuerung noch rechtzeitig einzugreifen und eine Suspendierung es zweiten Prozesses zu veranlassen. Insofern umfasst die Zugriffssteuerung vorzugsweise eine Hardware-Unterbrechungseinrichtung, die einen bevorstehenden Zugriff des zweiten Prozesses auf den nichtflüchtigen Speicher erkennt und ein Hardware-Unterbrechungssignal auslöst.

Gemäß einer zweiten Ausführungsform der vorliegenden Erfindung stellt die Zugriffssteuerung der Prozesssteuerung eine die übliche Ausführungspriorität eines Prozesses ergänzende Vorzugsinformation bereit, die angibt, ob ein Prozess unabhängig von seiner ohnehin von der Prozesssteuerung berücksichtigten Ausführungspriorität bevorzugt auszuführen ist. Diese Vorzugsinformation wird der Prozesssteuerung vorzugsweise für genau diejenigen Prozesse bereitgestellt, die von der Zugriffssteuerung als potentiell zu einem Zugriffskonflikt führende Prozesse eingestuft werden. Ein zweiter Prozess, der zunächst von der Prozesssteuerung nebenläufig zu einem auf den nichtflüchtigen Speicher zugreifenden ersten Prozess ausgeführt werden soll, wird gemäß der von der Zugriffssteuerung bereitgestellten Vorzugsinformation genau dann von der Prozesssteuerung während der Ausführung des ersten Prozesses suspendiert, wenn die Vorzugsinformation des zweiten Prozesses angibt, dass dieser nicht bevorzugt auszuführen ist.

Hierbei kann die Zugriffssteuerung beispielsweise bei oder vor jeder Ausführung eines schreibend auf den nichtflüchtigen Speicher zugreifenden Prozesses prüfen, welche potentiell nebenläufig auszuführenden Prozesse lesend auf den nichtflüchtigen Speicher zugreifen und zu einem Zugriffskonflikt mit dem schreibend auf den nichtflüchtigen Speicher zugreifenden Prozess führen könnten. Für genau diese lesenden Prozesse werden dann der Prozesssteuerung Vorzugsinformationen bereitgestellt.

Vorzugsweise gibt die von der Zugriffssteuerung bereitgestellte Vorzugsinformation an, ob die Ausführung des betreffenden Prozesses zeitkritisch ist. D.h., die Prozesssteuerung kann während der Ausführung eines schreibend auf den nichtflüchtigen Speicher zugreifenden ersten Prozesses alle diejenigen zweiten Prozesse ohne Weiteres suspendieren, deren Vorzugsinformation angibt, dass diese Prozesse nicht zeitkritisch sind. Dadurch kann, unabhängig davon, ob ein Prozess tatsächlich auf den nichtflüchtigen Speicher zugreifen wird, üblicherweise bereits für die meisten von der Prozesssteuerung bearbeiteten Prozesse ein Zugriffskonflikt mit dem ersten Prozess von vornherein ausgeschlossen werden, da jeweils nur wenige Prozesse zeitkritisch sein dürften.

Für diejenigen wenigen Prozesse, die gemäß der Vorzugsinformation bevorzugt auszuführen sind, stellt die Zugriffssteuerung der Prozesssteuerung ferner einen Quellspeicherdeskriptor bereit, der denjenigen Speicherbereich des nichtflüchtigen Speichers angibt, auf den der betreffende, bevorzugt auszuführende Prozess zugreift. Hierbei kann in dem durch den Quellspeicherdeskriptor angegebenen Speicherbereich sowohl ein ausführbarer Programmcode des zweiten Prozesses liegen als auch Daten, die der zweite Prozess bei seiner Ausführung benötigt bzw. verarbeitet.

In dem Fall eines bevorzugt auszuführenden Prozesses, für den die Zugriffssteuerung der Prozesssteuerung einen Quellspeicherdeskriptor bereitstellt, wird die Prozesssteuerung durch die Zugriffssteuerung veranlasst, die Ausführung des auf den nichtflüchtigen Speicher zugreifenden ersten Prozesses erst dann zu beginnen, wenn der durch den betreffenden Quellspeicherdeskriptor angegebene Speicherbereich des nichtflüchtigen Speichers in einen anderen Speicher umkopiert wurde, z.B. in einen Cache-Speicher, einen flüchtigen Speicher oder einen von dem nichtflüchtigen Speicher unterschiedlichen, weiteren nichtflüchtigen Speicher. Dieser umkopierte Speicherbereich wird der Prozesssteuerung von der Zugriffssteuerung mittels eines Zielspeicherdeskriptors bereitgestellt, der den entsprechenden Speicherbereich in dem Cache- oder flüchtigen oder weiteren nichtflüchtigen Speicher angibt. Auf den von dem Zielspeicherdeskriptor angegebenen Speicherbereich kann der zweite Prozess ohne Zugriffskonflikte mit dem ersten Prozess zugreifen, so dass die Prozesssteuerung den ersten und den zweiten Prozess nebenläufig ausführen kann.

Sofern ein zu dem schreibend auf den nichtflüchtigen Speicher zugreifenden ersten Prozess nebenläufig auszuführender zweiter Prozess gar nicht auf den nichtflüchtigen Speicher zugreift, stellt die Zugriffssteuerung der Prozesssteuerung für diesen Prozess einen leeren Quellspeicherdeskriptor bereit. Die Prozesssteuerung kann bevorzugt auszuführende Prozesse, z.B. zeitkritische Prozesse mit leerem Quellspeicherbereich ohne Weiteres nebenläufig zu dem ersten Prozess ausführen, da Zugriffskonflikte mit dem ersten Prozess gar nicht auftreten können.

Gemäß einer dritten Ausführungsform der vorliegenden Erfindung prüft die Zugriffssteuerung vor der Ausführung eines schreibend auf den nichtflüchtigen Speicher zugreifenden ersten Prozesses, ob während der Ausführung des ersten Prozesses eine Unterbrechung aufgrund eines Zählerüberlaufs oder eines Zeitablaufs zu erwarten ist, so dass die Ausführung des ersten Prozesses durch die entsprechende Unterbrechungsroutine (ISR) unterbrochen werden würde. Derartige "Timer-Interrupts" werden bei jedem Überlauf eines Zeitgeber-Registers aufgerufen, um regelmäßig oder periodisch auftretende Ereignisse zu realisieren, z.B. eine Systemuhr, regelmäßige Zugriffe auf den nichtflüchtigen Speicher oder dergleichen. Vorzugsweise prüft die Zugriffssteuerung ferner, ob eine solche Unterbrechungsroutine dann auf den nichtflüchtigen Speicher zugreift und insofern ein Zugriffskonflikt mit dem dann suspendierten ersten Prozess auftreten kann. Sofern eine solche Unterbrechung aufgrund eines Zählerüberlaufs oder Zeitablaufs auftritt, veranlasst die Zugriffssteuerung die Prozesssteuerung, die Ausführung des ersten Prozesses bis nach Abarbeitung der Unterbrechung zu verschieben, um etwaige Zugriffskonflikte zu vermeiden.

Prinzipiell können die drei beschriebenen Ausführungsformen und die entsprechenden Strategien zur Vermeidung von Zugriffskonflikten nahezu beliebig kombiniert werden. So ist es beispielsweise möglich, dass die erfindungsgemäße Zugriffssteuerung vor der Ausführung eines schreibend auf den nichtflüchtigen Speicher zugreifenden ersten Prozesses prüft, ob während dessen Ausführung eine Unterbrechung aufgrund eines Zählerüberlaufs oder Zeitablaufs zu erwaten ist, und, sofern dies der Fall ist, die Prozesssteuerung einerseits veranlasst, die Ausführung des ersten Prozesses erst dann zu beginnen, wenn ein Speicherbereich in dem nichtflüchtigen Speicher, auf den ein zweiter Prozess zugreift, in einen von dem nichtflüchtigen Speicher verschiedenen Speicher kopiert wurde, oder die Prozesssteuerung andererseits veranlasst, einen auf den nichtflüchtigen Speicher zugreifenden zweiten Prozess für die Dauer der Ausführung des ersten Prozesses zu suspendieren. Ebenso ist es möglich, dass die Zugriffssteuerung der Prozesssteuerung Vorzugsinformationen und gegebenenfalls Quell- und Zielspeicherdeskriptoren für Prozesse bereitstellt, die infolge einer Unterbrechung aufgrund Zählerüberlaufs oder Zeitablaufs auszuführen sind.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Figur 1: ein Ablaufdiagramm einer ersten Ausführungsform des erfin- dungsgemäßen Verfahrens;
- Figur 2: ein Ablaufdiagramm einer zweiten Ausführungsform des erfin- dungsgemäßen Verfahrens;
- Figur 3: ein Ablaufdiagramm einer dritten Ausführungsform des erfin- dungsgemäßen Verfahrens; und
- Figur 4: einen erfindungsgemäßen Datenträger.

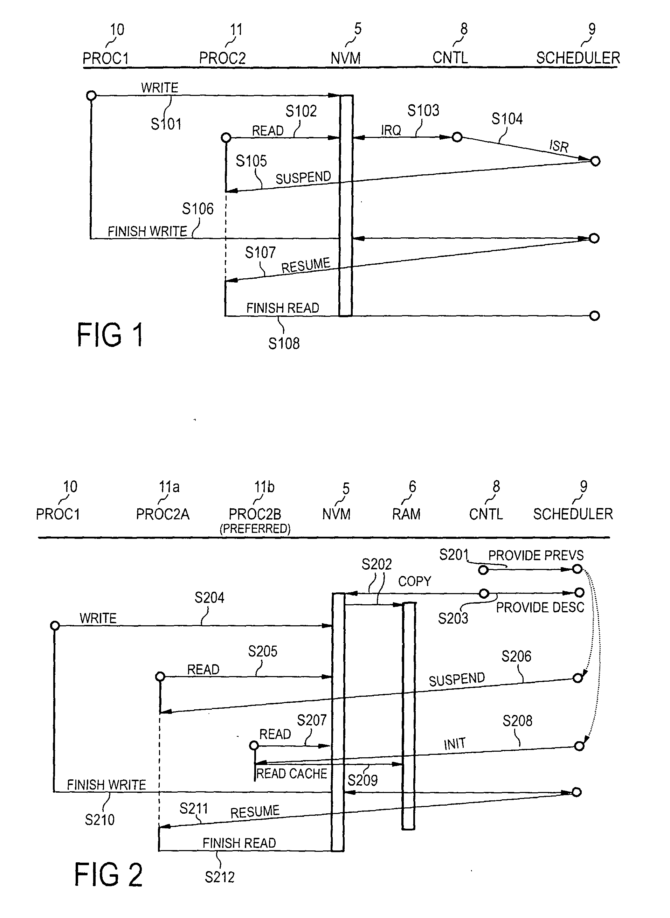

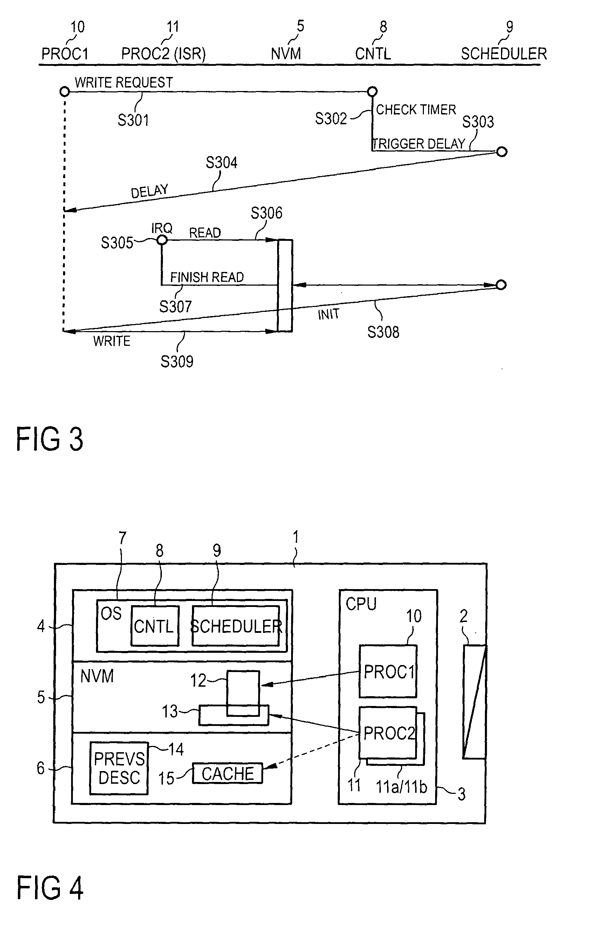

Der in Fig. 4 illustrierte portable Datenträger 1 kann ein beliebiger multitasking- bzw. multithreadingfähiger Datenträger 1 sein, z.B. eine mit einem geeigneten Betriebssystem 7 (OS) ausgestattete Mikroprozessor-Chipkarte (Smart Card), Mobilfunkkarte, sichere Multimediakarte oder dergleichen. Ein solcher Datenträger 1 umfasst insbesondere eine Zugriffssteuerung 8 (CNTL), die mit einer von dem Betriebssystem 7 bereitgestellten Prozesssteuerung 9 (SCHEDULER) derart zusammenwirkt, dass die in den Fig. 1 bis 3 illustrierten Verfahren separat oder kombiniert ausgeführt werden können.

Insofern besitzt ein erfindungsgemäßer Datenträger 1 einen prinzipiell herkömmlichen Aufbau und umfasst demzufolge beispielsweise eine Datenkommunikationsschnittstelle 2, einen Prozessor 3 (CPU) zur Prozessausführung sowie eine Speicheranordnung bestehend aus einem permanenten ROM-Speicher 4, einem nichtflüchtigen Flash- oder EEPROM-Speicher 5 (NVM) sowie einem flüchtigen RAM-Speicher 6. Das Betriebssystem 7 befindet sich im ROM-Speicher 4 des Datenträgers 1 und stellt grundlegende Systemfunktionen bereit, insbesondere die Verwaltung der Betriebsmittel des Datenträgers 1, z.B. die von dem flüchtigen und nichtflüchtigen Speicher 5, 6 bereitgestellten Speicherressourcen oder die von dem Prozessor 3 für die Prozessausführung bereitgestellte Rechenzeit. Letztere wird von der Prozesssteuerung 9 (auch als "Prozess-Scheduler" bezeichnet) verwaltet, die den auf den Prozessor 3 nebenläufig auszuführenden Prozessen 10, 11 Rechenzeit des Prozessors 3 zentral bereitstellt. Dazu teilt die Prozesssteuerung 9 den Prozessen 10,11 abhängig von deren jeweiligen Ausführungsprioritäten derart alternierend Rechenzeit zu, dass der Eindruck einer gleichzeitigen Prozessausführung entsteht. Bei einer solchen nebenläufigen Prozessausführung berücksichtigt die Prozesssteuerung 9 neben den Ausführungsprioritäten der Prozesse 10, 11 mitunter weitere vorgegebene Kriterien, z. B. die Vorgabe, dass Prozesse trotz geringer Ausführungspriorität nicht unverhältnismäßig lange auf eine Ausführung warten müssen oder dergleichen.

Besondere Anforderungen werden dann an die Betriebsmittelverwaltung des Betriebssystems 7 gestellt, wenn auszuführende Prozesse 10, 11 gleichzeitig um mehrere Betriebsmittel konkurrieren, beispielsweise um von der Prozesssteuerung 9 zuzuteilende Rechenzeit des Prozessor 3 und um Speicherplatz in dem nichtflüchtigen Speicher 5. Dies ist z.B. bei den von der Prozesssteuerung 9 nebenläufig auszuführenden Prozessen 10 und 11 der Fall, denn der Prozess 10 (PROC1) schreibt in einen Speicherbereich 12 des nichtflüchtigen Speichers 5 Daten, während der Prozess 11 (PROC2) quasi-gleichzeitig aus dem Speicherbereich 13 des nichtflüchtigen Speichers 5 Daten ausliest, z.B. in Form von benötigten Nutzdaten oder auszuführendem Programmcode. Hierbei können sich die Speicherbereiche 12 und 13 sogar überlappen, wenn der Prozess 10 Daten schreibt, die der Prozess 11 benötigt.

Bei diesem Szenario ist einerseits die Rechenzeit des Prozessors 3 von der Prozesssteuerung 9 gemäß den Ausführungsprioritäten und sonstigen Kriterien zu verwalten und andererseits müssen aus der nebenläufigen Ausführung der Prozesse 10 und 11 resultierende Zugriffskonflikte im nichtflüchtigen Speicher 5 frühzeitig erkannt und ausgeschlossen werden. Dazu umfasst das Betriebssystem 7 zusätzlich die der Prozesssteuerung 9 übergeordnete Zugriffssteuerung 8, die in die Funktionsweise der Prozesssteuerung 9 eingreifen kann, sofern bei einer herkömmlichen nebenläufigen Ausführung der Prozesse 10 und 11 ein Risiko von Zugriffskonflikten im nichtflüchtigen Speicher 5 besteht. Die Zugriffssteuerung 8, die, wie in Fig. 4 illustriert, als Betriebssystemkomponente ausgestaltet sein kann, dient also der vorausschauenden Erkennung und Vermeidung von Zugriffskonflikten auf den nichtflüchtigen Speicher 5, die für die Prozesssteuerung 9 aufgrund ihrer eingeschränkten Sicht auf die Betriebsmittel alleine nicht erkennbar wären.

Die Figuren 1 bis 3 illustrieren Ausführungsformen der vorliegenden Erfindung, bei denen jeweils ein unterschiedliches Zugriffskonfliktszenario von der Zugriffssteuerung 8 frühzeitig erkannt und in Wechselwirkung mit der Prozesssteuerung 9 verhindert wird. Bei allen illustrierten Ausführungsformen nimmt ein solches Zugriffskonfliktszenario seinen Ausgang in einem von der Prozesssteuerung 9 aktivierten, schreibend auf den nicht flüchtigen Speicher 5 zugreifenden ersten Prozess 10 und einem nebenläufig mit dem ersten Prozess 10 auszuführenden, lesend auf den nichtflüchtigen Speicher zugreifenden zweiten Prozess 11, bei dessen Ausführung entweder Nutzdaten oder ein ausführbarer Programmcode aus dem nichtflüchtigen Speicher 5 ausgelesen wird.

Gemäß der in Fig. 1 illustrierten Ausführungsform greift der erste Prozess 10 in Schritt S101 schreibend auf den nichtflüchtigen Speicher 5 zu (WRITE), während in Schritt S102 der nebenläufig ausgeführte zweite Prozess 11 einen Lesezugriff auf den nichtflüchtigen Speicher 5 beabsichtigt bzw. bereits vorbereitet (READ). Dieser beabsichtigte Lesezugriff des zweiten Prozesses 11 kann prinzipiell zu einem Zugriffskonflikt mit dem bereits ausgeführten Schreibzugriff des ersten Prozesses 10 führen.

Zur Zugriffskonfliktvermeidung umfasst die Zugriffssteuerung 8 als Mechanismus, mit dem der beabsichtigte bzw. bereits vorbereitete Lesezugriff des zweiten Prozesses 11 rechtzeitig erkannt und noch vor der ersten tatsächlichen Leseoperation suspendiert werden kann, eine (Hardware-) Unterbrechungseinrichtung, die den Lesezugriff auf den nichtflüchtigen Speicher 5 hardwarenah und dadurch besonders schnell erkennt. Sobald also der zweite Prozess 11 in Schritt S102 seinen Lesezugriff auf den nichtflüchtigen Speicher 5 beginnt, wird dies von der Unterbrechungseinrichtung der Zugriffssteuerung 8 registriert und in Schritt S103 ein Unterbrechungssignal (IRQ) ausgelöst, wodurch die nebenläufige Prozessausführung des Prozesssteuerung 9 (und somit auch der Lesezugriff des zweiten Prozesses 11) vorübergehend zugunsten der Unterbrechungsroutine (ISR) angehalten wird, die die Prozesssteuerung 9 in Schritt S104 anweist, den zweiten Prozess 11 unmittelbar zu suspendieren. Die Prozesssteuerung 9 suspendiert dann in Schritt S105, wie von der Zugriffssteuerung 8 gewünscht, den zweiten Prozess 11 außerplanmäßig (SUSPEND), bevor der beabsichtigte Lesezugriff des zweiten Prozesses 11 zu einem Zugriffskonflikt in dem nichtflüchtigen Speicher 5 führen kann. Anschließend kann in Schritt S106 der Schreibzugriff des ersten Prozesses 10 konfliktfrei zu Ende geführt werden (FINISH WRITE). Nachdem die Prozesssteuerung 9 die Beendigung des Schreibzugriffes des ersten Prozesses 10 in Schritt S106 registriert hat, wird die Ausführung des suspendierten zweiten Prozesses 11 in Schritt S107 wieder aufgenommen (RESUME) bis in Schritt S108 auch der Lesezugriff beendet wird (FINISH READ).

Bei der in Fig. 1 gezeigten Ausführungsform verhindert die Zugriffssteuerung 8 einen Zugriffskonflikt im nichtflüchtigen Speicher 5 also dadurch, dass unabhängig von etwaigen Ausführungsprioritäten der zweite Prozess 11 zu Gunsten des schreibend auf den nichtflüchtigen Speicher 5 zugreifenden ersten Prozesses 10 suspendiert wird, indem ein von der Zugriffssteuerung 8 bzw. deren Unterbrechungseinrichtung bereitgestellte "Hardware Trap" den potentiellen Zugriffskonflikt rechtzeitig erkennt.

Die Ausführungsform gemäß Fig. 2 basiert auf dem Grundgedanken, den einzelnen Prozessen 10, 11 eine Vorgabe zuzuordnen, wie der Prozess in Bezug auf einen potentiellen Zugriffskonflikt zu behandeln ist. Die Vorgaben können als Vorzugsinformationen 14 gespeichert sein. Die Vorzugsinformation 14 betrifft insbesondere eine Information darüber, ob die Ausführung der betreffenden Prozesse11a, 11b zeitkritisch ist, z.B. weil er einen Sachverhalt in Echtzeit abarbeiten muss oder dergleichen. Ausgehend von der Vorzugsinformation 14 beeinflusst die Zugriffssteuerung 8 die Prozesssteuerung 9 derart, dass ein lesend auf den nichtflüchtigen Speicher 5 zugreifender Prozess 11a, 11b gegenüber einem bereits schreibend auf den nichtflüchtigen Speicher zugreifenden Prozess 10 zumindest gleichberechtigt (d.h. nebenläufig) zu behandeln ist, wenn der betreffend Prozess 11a, 11b in einem ausreichenden Maße zeitkritisch ist.

Insbesondere soll die Vorgabe eine Kopiervorgabe und eine Unterbrechungsvorgabe umfassen. Unterbrechungsvorgaben geben an, ob der Prozess unterbrochen werden darf. Kopiervorgaben geben an, ob (und welche) Inhalte des nicht-flüchtigen Speichers vor der Ausführung des Prozesses in einen anderen, vorzugsweise flüchtigen Speicher zu kopieren sind.

Die Zugriffssteuerung 8 wertet die Vorgaben oder Vorzugsinformation 14 aus, um das Kopieren vorab durchzuführen und/ oder um die Prozesssteuerung 9 über die Unterbrechungsvorgaben bzw. die Speicherorte der kopierten Inhalte zu informieren.

Die Vorzugsinformationen 14 betreffen insofern nicht die herkömmlichen Ausführungsprioritäten. Vielmehr handelt es sich um eine zusätzliche Information, ob im Falle eines potentiellen Zugriffskonflikts die Ausführung des zweiten Prozesses 11 derart wichtig bzw. zeitkritisch ist, dass er nicht einfach suspendiert werden kann, sondern in einem vom dem nichtflüchtigen Speicher 5 verschiedenen Speicher 15 nebenläufig fortgesetzt werden muss. Insofern ist diese Ausführungsform auch insbesondere mit der Ausführungsform gemäß Fig. 1 kombinierbar, z.B. indem der zweite Prozess 11 nach einem Unterbrechungssignal infolge eines Lesezugriffs (vgl. Fig. 1, S103) abhängig von dessen Vorzugsinformation suspendiert (vgl. Fig. 2, S206) oder in einem alternativen Speicher 15 nebenläufig fortgesetzt wird (vgl. Fig. 2, S207-S209).

Bei der Ausführungsform der Fig. 2 ist der lesend auf den nicht flüchtigen Speicher zugreifende Prozess 11a beispielsweise nicht zeitkritisch, während der ebenfalls lesend auf den nichtflüchtigen Speicher 5 zugreifende Prozess 11b zeitkritisch ist und insofern bevorzugt ausgeführt wird. Derartige Vorzugsinformationen 14 zu den Prozessen 11a, 11b können der Prozesssteuerung 9 in einem optionalen Schritt S201 von der Zugriffssteuerung 8 bereitgestellt werden (PROVIDE PREVS). Wenn der zeitkritische Prozess 11b zudem auf den nicht-flüchtigen Speicher zugreifen muss, ist er durch eine Kopiervorgabe (PREFERRED) markiert.

Die Zugriffssteuerung wertet die Vorzugsinformationen 14 aus und kopiert für den Prozess 11b in einem Schritt S202 den Speicherbereich 13 im nichtflüchtigen Speicher 5 in einen entsprechenden Speicherbereich 15 im flüchtigen RAM-Speicher 6 bzw. in einen z.B. im RAM-Speicher 6 angelegten Cache-Pufferspeicher 15. Wenn der Speicherbereich ein Cache-Pufferspeicher ist, wird dem Prozess bei einem späteren Zugriff (S207) auf den gecachten Inhalt des nicht-flüchtigen Speichers 5 automatisch der Inhalt der Kopie aus dem Cache bereitgestellt. In Fig. 2 ist jedoch nicht diese sondern eine andere Variante dargestellt, in welcher die Zugriffssteuerung in Schritt S203 der Prozesssteuerung 9 für bevorzugt auszuführende Prozesse, wie z.B. den Prozess 11b, auch einen Zielspeicherdeskriptor (PROVIDE DESC) bereitstellt. Der Deskriptor gibt den Speicherbereich 15 der zuvor erstellten Kopie im flüchtigen RAM-Speicher 6 an.

In Schritt S204 erflogt ein Schreibzugriff des ersten Prozesses 10 (WRITE) auf den nichtflüchtigen Speicher 5 und in Schritt S205 ein Lesezugriff des Prozesses 11a (READ), so dass die Prozesssteuerung 9 zunächst eine nebenläufige Ausführung der Prozesse 10 und 11a vorzunehmen versucht. Anhand der in Schritt S201 bereitgestellten Vorzugsinformation 14 erkennt die Prozesssteuerung 9 jedoch, dass der lesend zugreifende Prozess 11a nicht zeitkritisch ist und suspendiert diesen daraufhin in Schritt S206, während der schreibend zugreifende Prozess 10 weiter ausgeführt wird.

In Schritt S207 will der Prozess 11b lesend auf den Speicherbereich 13 des nichtflüchtigen Speichers 5 (READ) zugreifen. Sollte der kopierte Speicherbereich 15 ein Cache-Pufferspeicher sein, so erhält der Prozess 11b, ohne dass es einer weiteren Anpassung bedarf, automatisch den entsprechenden Inhalt des Cache-Pufferspeichers. Die Schritte S203, 2008 und S209 in Fig. 2 sind dann nicht nötig. Andernfalls kennt die Prozesssteuerung 9 zu dem Prozess 11b bereits die Vorzugsinformation 14, wonach der Prozess 11b zeitkritisch ist und insofern nicht wie der Prozess 11a suspendiert werden kann und den Zielspeicherdeskriptor. Die Prozesssteuerung 9 kann den Prozess 11b in Schritt S208 mit dem kopierten Speicherbereich 15 initiieren (INIT) und dieser den Lesezugriff somit auf den kopierten Speicherbereich 15 in Schritt S209 ausführt (READ RAM). Eine nebenläufige Ausführung der Prozesse 10 und 11b durch die Prozesssteuerung 9 ist nun möglich, da diese nunmehr auf physikalisch getrennte Speicherbereiche 13 und 15 bzw. auf physikalisch verschiedene Speicher 5, 6 zugreifen.

Nachdem in Schritt S210 der Schreibzugriff des Prozesses 10 beendet wird (FINISH WRITE), kann der in Schritt S204 zunächst suspendierte, nicht zeitkritische Prozess 11a in Schritt S211 fortgesetzt werden (RESUME) und kommt in Schritt S212 ebenfalls zu einem Ende (FINISH READ).

Eine weitere alternativ oder in Kombination mit den Ausführungsformen der Fig. 1 und 2 ausführbare Ausführungsform der Erfindung zeigt Fig. 3. Hierbei prüft die Zugriffssteuerung 8 vor einer Ausführung eines schreibend auf den nichtflüchtigen Speicher 5 zugreifenden ersten Prozesses 10 durch die Prozesssteuerung 9, ob während dieser Ausführung eine Unterbrechung (Interrupt) zu erwarten ist, die die Ausführung des Prozesses 10 verzögern würde, bzw. ob sogar eine solche Unterbrechung (Interrupt) zu erwarten ist, deren Unterbrechungsroutine ISR selbst auf den nichtflüchtigen Speicher 5 zugreift und so zu einem Zugriffskonflikt mit dem dann suspendierten Prozess 10 führen kann. Insbesondere wird hierbei ein Auslösen sogenannter "Timer Interrupts" geprüft, d.h. Unterbrechungen, die regelmäßig aus Zählerüberläufen oder Zeitabläufen resultieren und durch die Zugriffssteuerung 8 beispielsweise dadurch erkannt werden können, dass die aktuellen Werte der entsprechenden Zählerregister geprüft werden.

Nach einer Anfrage für einen Schreibzugriff des von der Prozesssteuerung 9 ausgeführten Prozesses 10 in Schritt S301 (WRITE REQUEST) prüft die Zugriffssteuerung 8 in Schritt S302, ob während der voraussichtlichen Ausführungszeit des Prozesses 10 eine Unterbrechung aufgrund eines Zählerüberlaufs oder Zeitablaufs auftreten kann bzw. wird. Sofern dies der Fall ist, wird die Prozesssteuerung 9 von der Zugriffssteuerung 8 in Schritt S303 angewiesen, den Prozess 10, der einen Schreibzugriff auf den nichtflüchtigen Speicher 5 beabsichtigt, zu verzögern (TRIGGER DELAY), mit der Folge, dass die Prozesssteuerung 9 die Ausführung des Prozesses 10 in Schritt S304 bis nach Auftreten der erwarteten Unterbrechung und deren Behandlung durch die entsprechende Unterbrechungsroutine aussetzt (DELAY).

Wenn dann in Schritt S305 die erkannte Unterbrechung (IRQ) eintritt und gegebenenfalls auch ein Lesezugriff der entsprechenden Unterbrechungsroutine (ISR) - die dann als mit dem Prozess 10 konkurrierender zweiter Prozess 11 angesehen werden kann - auf den nichtflüchtigen Speicher 5 in Schritt S306 ausgeführt wird (READ), kann ein Zugriffskonflikt mit dem schreibenden Prozess 10 nicht stattfinden, da dieser bis nach der Ausführung des lesenden Prozesses 11 bzw. der Unterbrechungsroutine ISR verzögert bzw. ausgesetzt wird. Wenn dann in Schritt S307 der Lesezugriff der Unterbrechungsroutine ISR beendet wird (FINISH READ), kann die Prozesssteuerung 9 in Schritt S308 den von dem Prozess 10 bereits in Schritt S301 beantragten Schreibzugriff initiieren (INIT), welcher dann schließlich in Schritt S309 stattfinden kann (WRITE), ohne dass ein Zugriffskonflikt aufgrund einer Unterbrechung zu befürchten ist oder eine aufgrund von Unterbrechungen unnötig verlängerte Ausführung des Prozesses 10 auftreten kann, die das Risiko von Zugriffskonflikten mit lesend auf den nichtflüchtigen Speicher zugreifenden Prozessen 11 weiter erhöhen würde.

Selbstverständlich kann der erfindungsgemäße Datenträger 1 bzw. seine Zugriffssteuerung 8 beliebige Kombinationen der in den Fig. 1 bis 3 skizzierten Verfahren umsetzen. So ist es beispielsweise möglich, dass bei Erkennen einer Unterbrechung aufgrund des Zählerüberlaufs oder Zeitablaufs (vgl. Fig. 3, S302) ein Speicherbereich 13 im nichtflüchtigen Speicher 5, auf den eine entsprechende Unterbrechungsroutine ISR zugreifen wird, in einen Cash-Pufferspeicher 15 kopiert wird (vgl. Fig. 2, S206), um eine Anfrage nach einem Schreibzugriff des Prozesses 10 (vgl. Fig. 3, S301) unmittelbar nach dem Kopiervorgang ausführen zu können (vgl. Fig. 2, S209). Ebenso ist es möglich, einen infolge einer Unterbrechung zu erwartenden, lesend auf den nichtflüchtigen Speicher 5 zugreifenden Prozess 11 analog zu der in Fig. 1 skizzierten Ausführungsform zu suspendieren, sobald der bevorstehende Lesezugriff über eine geeignete Unterbrechungseinrichtung der Zugriffssteuerung 8 erkannt wird (vgl. Fig. 1, S103-S105).

## Patentansprüche

1. Verfahren auf einem portablen Datenträger (1) mit einem nichtflüchtigen Speicher (5) und einer Prozesssteuerung (9) zur nebenläufigen Prozessausführung, wobei ein Ausführen (S102; S203, S205; S306) eines zweiten Prozesses (11) während eines auszuführenden ersten Prozesses (10) vorgesehen ist, der schreibend auf den nichtflüchtigen Speicher (5) zugreift (S101; S202; S301), **dadurch gekennzeichnet, dass** eine von der Prozesssteuerung (9) unabhängige Zugriffssteuerung (8) des Datenträgers (1) prüft (S103; S201; S302), ob der zweite Prozess (11) bei einem nebenläufigen Ausführen zu dem ersten Prozess (10) derart auf den nichtflüchtigen Speicher (5) zugreift (S102; S203, S205; S306), dass ein Zugriffskonflikt auftreten kann, und, sofern ein solcher Zugriffskonflikt auftreten kann, in die Prozesssteuerung (9) derart eingreift (S104; S201, S207; S303), dass der zweite Prozess (11) ohne Zugriffskonflikt ausgeführt wird.

2. Verfahren nach Anspruch 1, **dadurch gekennzeichnet, dass** die Prozesssteuerung (9) den zweiten Prozess (11) nebenläufig (S102) zu dem ersten Prozess (10) ausführt (S101) und die Zugriffssteuerung (8) die Prozesssteuerung (9) veranlasst (S104), den zweiten Prozess (11) zumindest während des Ausführens des ersten Prozesses (10) zu suspendieren (S105), sobald die Zugriffssteuerung (8) einen bevorstehenden Zugriff des zweiten Prozesses (11) auf den nichtflüchtigen Speicher (5) erkennt (S103).

3. Verfahren nach Anspruch 2, **dadurch gekennzeichnet, dass** die Zugriffssteuerung (8) ein Unterbrechungssignal erzeugt (S103) und eine zugehörige Unterbrechungsroutine die Prozesssteuerung (9) durch eine Suspendierungsanweisung veranlasst (S104), den zweiten Prozess (11) zu suspendieren (S105).

4. Verfahren nach Anspruch 2 oder 3, **dadurch gekennzeichnet, dass** die Zugriffssteuerung (8) eine Hardware-Unterbrechungseinrichtung umfasst, die den bevorstehenden Zugriff des zweiten Prozesses (11) auf den nichtflüchtigen Speicher (5) erkennt (S103).

5. Verfahren nach einem der Ansprüche 1 bis 4, **dadurch gekennzeichnet, dass** die Zugriffssteuerung (8) der Prozesssteuerung (9) eine Vorzugsinformation (14) für den zweiten Prozess (11) bereitstellt (S201), die angibt, ob der zweite Prozess (11) bevorzugt auszuführen ist (S208), und die Prozesssteuerung (9) den zweiten Prozess (11) zumindest während des Ausführens des ersten Prozesses (10) suspendiert (S204), sofern die Vorzugsinformation (14) des zweiten Prozesses (11) angibt, dass der zweite Prozess (11) nicht bevorzugt auszuführen ist.

6. Verfahren nach Anspruch 5, **dadurch gekennzeichnet, dass** die Zugriffssteuerung (8) der Prozesssteuerung (9) eine Vorzugsinformation (14) für den zweiten Prozess (11) bereitstellt (S201), die wiedergibt, ob die Ausführung des zweiten Prozesses (11) zeitkritisch ist.

7. Verfahren nach Anspruch 5 oder 6, **dadurch gekennzeichnet, dass**, sofern die Vorzugsinformation (14) des zweiten Prozesses (11) angibt, dass der zweite Prozess (11) bevorzugt auszuführen ist, die Zugriffssteuerung (8) der Prozesssteuerung (9) einen Quellspeicherdeskriptor für den zweiten Prozess (11) bereitstellt (S201), der einen Speicherbereich (13) in dem nichtflüchtigen Speicher (5) angibt, auf den der zweite Prozess (11) zugreift, und die Zugriffssteuerung (8) derart in die Prozesssteuerung (9) eingreift (S201, S207), dass der erste Prozess (10) erst ausführt wird, nachdem der angegebene Speicherbereich (13) in einen von dem nichtflüchtigen Speicher (5) verschiedenen Speicher (6, 15) kopiert wurde (S206).

8. Verfahren nach Anspruch 7, **dadurch gekennzeichnet, dass**, nachdem der Speicherbereich (13) in den von dem nichtflüchtigen Speicher (5) verschiedenen Speicher (6, 15) kopiert wurde (S206), die Prozesssteuerung (9) den zweiten Prozess (11) derart nebenläufig zu dem ersten Prozess (10) ausführt (S208), dass der zweite Prozess (11) auf den kopierten Speicherbereich (15) in dem von dem nichtflüchtigen Speicher (5) verschiedenen Speicher (6, 15) zugreift (S209).

9. Verfahren nach Anspruch 8, **dadurch gekennzeichnet, dass** die Zugriffssteuerung (8) der Prozesssteuerung (9) einen Zielspeicherdeskriptor für den zweiten Prozess (11) bereitstellt (S207), der den kopierten Speicherbereich (15) in dem von dem nichtflüchtigen Speicher (5) verschiedenen Speicher (6) angibt.

10. Verfahren nach einem der Ansprüche 7 bis 9, **dadurch gekennzeichnet, dass** die Zugriffssteuerung (8) den Speicherbereich (13) in einen Cache-Pufferspeicher (15) oder in einen flüchtigen Speicher (6) kopiert und/oder dass, sofern der zweite Prozess (11) nicht auf den nichtflüchtigen Speicher (5) zugreift, die Zugriffssteuerung (8) einen leeren Quellspeicherdeskriptor für den zweiten Prozess (11) bereitstellt (S201) und die Prozesssteuerung (9) den zweiten Prozess (11) nebenläufig ausführt.

11. Verfahren nach einem der Ansprüche 1 bis 10, **dadurch gekennzeichnet, dass** die Zugriffssteuerung (8) vor der Ausführung des ersten Prozesses (10) prüft (S302), ob während der Ausführung des ersten Prozesses (10) eine Unterbrechung aufgrund eines Zählerüberlaufs oder Zeitablaufs auftritt (S305).

12. Verfahren nach Anspruch 11, **dadurch gekennzeichnet, dass** die Zugriffssteuerung (8) erkennt, dass während der Ausführung des ersten Prozesses (10) eine Unterbrechung aufgrund eines Zählerüberlaufs oder Zeitablaufs auftritt (S305), deren zugehörige Unterbrechungsroutine als zweiter Prozess (11) auf den nichtflüchtigen Speicher (5) zugreift (S306).

13. Verfahren nach einem der Ansprüche 1 bis 12, **dadurch gekennzeichnet, dass** der zweite Prozess (11) auf den nichtflüchtigen Speicher (5) zugreift (S102; S203, S205; S306), indem Daten aus dem nichtflüchtigen Speicher (5) ausgelesen werden und/oder indem beim Ausführen des zweiten Prozess (11) auf einen im nichtflüchtigen Speicher (5) liegenden ausführbaren Programmcode zugegriffen wird.

14. Portabler Datenträger (1), umfassend einen nichtflüchtigen Speicher (5), einen Prozessor (3) und eine Prozesssteuerung (9), die eingerichtet ist, Prozesse (10, 11) nebenläufig auf dem Prozessor (3) auszuführen, **gekennzeichnet durch** eine von der Prozesssteuerung (9) unabhängige Zugriffssteuerung (8), die eingerichtet ist, zu prüfen, ob bei einer Ausführung eines zweiten Prozesses (11) nebenläufig zu einem schreibend auf den nichtflüchtigen Speicher (5) zugreifenden ersten Prozess (10), der zweite Prozess (11) derart auf den nichtflüchtigen Speicher (5) zugreift, dass ein Zugriffskonflikt auftreten kann, und, sofern ein Zugriffskonflikt auftreten kann, derart in die Prozesssteuerung (9) eingreift, dass der zweite Prozess (11) ohne Zugriffskonflikt ausgeführt wird.

15. Datenträger (1) nach Anspruch 14, **dadurch gekennzeichnet, dass** die Zugriffssteuerung (8) und die Prozesssteuerung (9) derart zusammenwirken, dass ein Verfahren nach einem der Ansprüche 1 bis 13 ausgeführt wird.
